# EUROPEAN PATENT SPECIFICATION

(11) **EP 2 815 978 B1**
(45) Date of publication and mention of the grant of the patent: **25.04.2018**
(21) Application number: 14170561.6
(22) Date of filing: 30.05.2014
(51) Int. Cl.: B64D 13/06

(54) **AIRCRAFT REFRIGERATION UNIT EVAPORATOR HEATER**
FLUGZEUGKÜHLEINHEITSVERDAMPFERHEIZER
CHAUFFAGE D'ÉVAPORATEUR D'UNITÉ DE RÉFRIGÉRATION D'AVION

(30) Priority: 31.05.2013 US 201313906881
(43) Date of publication of application: 24.12.2014
(73) Proprietor: Hamilton Sundstrand Corporation, Windsor Locks, CT 06096-1010 (US)
(72) Inventor: Eowsakul, Vanwijak, Holyoke, MA Massachusetts 01040 (US)
(74) Representative: Gittins, Alex Michael

(56) References cited:
- WO-A1-2010/150469
- WO-A2-2013/043391
- US-A- 4 893 748
- US-A- 5 806 334
- US-A1- 2006 254 308
- US-A1- 2012 266 615

## Description

### BACKGROUND OF THE INVENTION

The subject matter disclosed herein relates to refrigeration units and, in particular, to refrigeration units in an aircraft.

Typical commercial aircraft include one or more cooling systems configured to provide temperature control to various regions of the aircraft. The aircraft cooling system(s) can include one or more vapor cycle refrigeration units. This type of refrigeration unit, in addition to other components, generally includes an evaporator in which a refrigerant absorbs heat from a fluid flow, e.g., air, in order to cool the flow. The cooled flow can be used to regulate the temperature of a designated area of the aircraft. The industry would appreciate increases to the lifespan and efficiency of refrigeration units.

US 4893748 describes a heating method and device for vehicles requiring limited power. US 2012/0266615 discloses a refrigeration unit according to the preamble of claim 1.

### BRIEF DESCRIPTION OF THE INVENTION

According to one aspect, a refrigeration unit for an aircraft is disclosed as claimed in claim 1.

According to another aspect embodiment, a method of regulating a temperature of a compartment of an aircraft is disclosed as claimed in claim 6.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a block diagram schematically illustrating an aircraft having a refrigeration unit; and
FIG. 2 is a block diagram illustrating the refrigeration unit of FIG. 1 according to one embodiment disclosed herein.

### DETAILED DESCRIPTION OF THE INVENTION

As discussed above, there are existing refrigeration units that work suitably for their intended purposes. One possible obstacle faced by some of these refrigeration units, however, is the formation of ice within the evaporator, particularly when the cooled flow contains a relatively high moisture content that condenses and freezes on fins or other surfaces of the evaporator. For example, the fluid flow may be a flow of air recycled from a passenger cabin of the aircraft that is relatively moisture-rich due to normal respiratory functions of passengers in the cabin. The formation of ice may lead to problems in the operation of the refrigeration unit, including inefficient operation and shortened life.

One or more of the embodiments disclosed herein may solve one or more of the above noted or other issues. Embodiments that are described in greater detail below may improve the efficiency and lifespan of an aircraft refrigeration unit by balancing heat loading within the refrigeration unit. More particularly, the embodiments disclosed herein may quickly and efficiently eliminate and/or avoid the formation of ice within heat exchangers, namely evaporators, of the refrigeration units. Formation of ice within evaporators of current refrigeration units can lead to inefficiency or failure of the refrigeration unit or components thereof, and action is typically taken upon detection of ice or conditions that indicate that ice may be present. De-icing activities typically include operating the compressor(s) of the system at low speeds, and/or shutting off the compressor(s) completely, particularly if the ice persists even after first reducing the operating speed of the compressor(s). The life of typical compressors is limited by the number of pressure cycles the compressors must undergo. Operating the compressors at constant speeds helps to reduce pressure cycling, thereby enhancing the lifespan of the compressors, while changing speeds and turning the compressor off-and-on may cause the compressors to experience potentially damaging pressure cycles. Another issue that may be faced by known refrigeration units is that more than one compressor is typically used by each refrigeration unit, and one of the compressors generally outperforms the other(s) when run at restricted speeds. This results in the outperforming compressor "robbing" needed oil (e.g., carried with the refrigerant being compressed) from the other compressor(s), further reducing the life and effectiveness of the units.

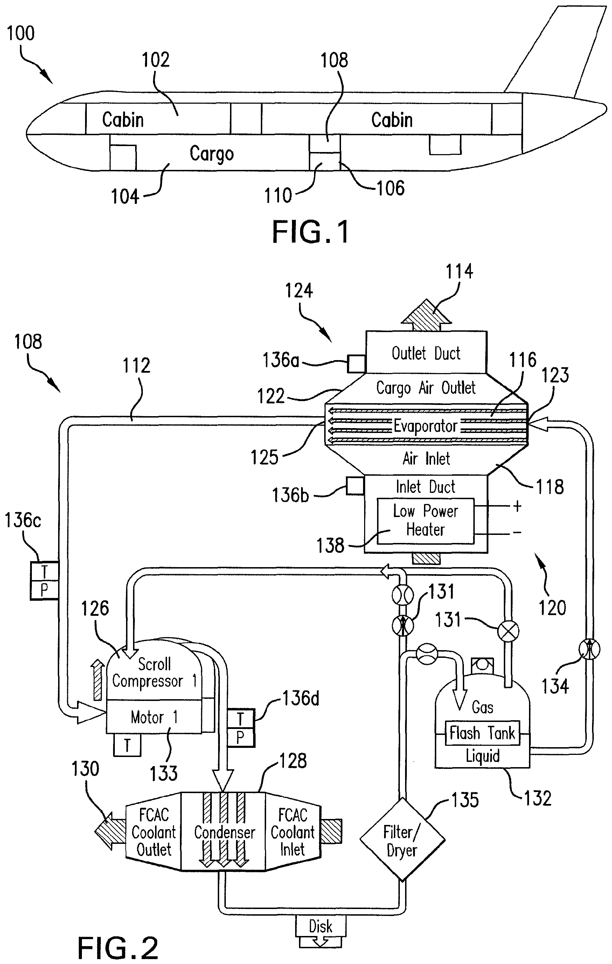

FIG. 1 schematically illustrates an aircraft 100 having a passenger compartment or cabin 102 and a cargo compartment 104. A thermal management system 106 is depicted schematically, and can be arranged to interface with the cabin 102, cargo compartment 104, ambient outside air, other thermal management or environmental control systems, etc., in order to assist in the regulation of the climate, e.g., temperature and pressure, within the aircraft 100.

In one embodiment, the system 106 includes a refrigeration unit 108, illustrated in more detail in FIG. 2, and a control unit 110 for controlling operation of the system 106 and the refrigeration unit 108. As will be better appreciated in view of the following discussion, the refrigeration unit 108 is arranged to control the temperature of a flow of fluid, namely, air, within the aircraft 100. In one embodiment, the refrigeration unit 108 takes in a flow of air recycled from the cabin 102, cools the flow of air as it travels through a heat exchanger of the refrigeration unit 108, and utilizes the cooled flow of air to control the temperature of the cargo compartment 104. In one embodiment, the cargo compartment 104 is arranged to hold live animals, perishable goods, or other contents that benefit from a temperature controlled environment. The air recycled from the cabin 102 may be mixed with air from other sources, or otherwise pre-processed or conditioned before being delivered to the refrigeration unit 108.

In one embodiment, the control unit 110 is a computerized device that includes any combination of a processor, logic unit, memory, etc., as needed to interpret inputted or received signals, e.g., user inputted or measured by a sensor in signal communication with the control unit 110. By signal communication it is meant that data, information, or instructions can be conveyed via electrical current or other electronic signals between the components. The signals can be used by the unit 110 to control the operation of valves, motors, and other components of the system 106 in response to inputted or received signals. In this way, the control unit 110 can automatically control the system 106 to maintain user inputted or preprogrammed conditions, e.g., temperatures, within corresponding areas of the aircraft 100, e.g., the cargo compartment 104.

In the illustrated embodiment, the refrigeration unit 108 includes a refrigeration loop or cycle 112 comprising lines, pipes, tubing, or conduits suitable for carrying a fluid refrigerant. The refrigerant can be any suitable refrigerant known in the art, and in one embodiment takes the form of R-134a. The refrigerant is used to exchange heat with a fluid in order to regulate the temperature of an area of the aircraft 100, such as the cargo compartment 104. More particularly, the refrigerant is arranged to absorb heat from an airflow 114 when both are directed through a heat exchanger in the form of an evaporator 116. The absorbed heat may be used to evaporate at least some of the refrigerant. The absorbed heat cools the airflow 114 and promotes evaporation of the refrigerant. The evaporator 116 includes an inlet 118 at an inlet side 120 and an outlet 122 at an outlet side 124 for the airflow 114 and an input 123 and an output 125 for the refrigerant to pass through the evaporator 116 while being directed through the cycle 112. As noted above, due to heat exchange within the evaporator 116, the refrigerant is at least partially converted to its gaseous phase when passing from the input 123 to the output 125. In one embodiment, the inlet 118 is in fluid communication with the cabin 102, i.e., the airflow 114 is, or includes, recycled cabin air, and the outlet 122 is in fluid communication with the cargo compartment 104 for enabling the temperature of the cargo compartment 104 to be regulated by cooling the air 114.

In addition to the evaporator 116, the unit 108 generally includes one or more compressors 126 which pressurize and heat the refrigerant, and pump the refrigerant to a condenser 128. The condenser 128 rejects heat from the compressed refrigerant to convert the refrigerant back into liquid phase. Cooling of the refrigerant in the condenser 128 can be accomplished by a coolant flow 130 as shown in Figure 2. In one embodiment, the coolant flow 130 is part of another refrigeration unit, temperature management system, or environmental control system utilized by the aircraft 100, e.g., for maintaining the temperature of another area of the aircraft 100. The refrigerant from the condenser 128 is transferred via the cycle 112 to an expansion tank 132, where relatively cooled liquid refrigerant can be delivered to the evaporator 116 via a metering device or valve 134 and flash steam is recycled back to the compressors 126. The control unit 110 can be used to control operation of the compressors 126 (e.g., speed of a motor driving the compressor 118), the valve 134 (e.g., flow rate of refrigerant through the valve 134 to the evaporator 116, and thus, cooling capability for the airflow 114), etc. Additional or alternate valves, e.g., valves 131, devices, e.g., one or more motors 133 for the compressors 126, or other components, e.g., a filter/dryer 135, can be connected along the cycle 112 or with the unit 108 as desired for facilitating or affecting the operation of the unit 108. One of ordinary skill in the art will recognize similarity between various components of the unit 108 and those of other vapor cycle refrigeration units known generally in the art, so further description of the general arrangement of these components is not necessary.

Moisture within the airflow 114, e.g., introduced due to the breathing of passengers within the cabin 102, may condense and freeze within the evaporator 116 under some circumstances. In one embodiment, ice is detected by monitoring delta temperature and/or delta pressure between the inlet and outlet sides 120 and 124 of the evaporator 116, e.g., via sensors 136a and 136b, respectively. In one embodiment ice is detected by monitoring the refrigerant in the cycle 112, e.g., via sensors 136c and/or 136d located at the inlet and outlet sides of the compressor 118, respectively. For example, it could be detected by the sensor 136c that the refrigerant is not fully converting to gaseous phase, thereby indicating inefficiency within the evaporator due to the formation of ice. The sensors 136a, 136b, 136c, and 136d (collectively "the sensors 136") may also be arranged to detect other parameters of the air 114 and/or the refrigerant of the cycle 112. The embodiments herein take advantage of the discovery that heating the already relatively hot air at the inlet side 120 of the evaporator can promote a longer lifespan, particularly with respect to the compressors 126, and increased overall efficiency of the unit 108. That is, the refrigeration unit 108 includes a heater 138 positioned at the inlet side 120 for heating the airflow 114 before or as it enters the evaporator 116 and/or transfers heat with the refrigerant in the cycle 112. By positioned at the inlet side 120, it is meant that the heater 138 is upstream of the evaporator 116 with respect to the direction of the airflow 114. In this way, instead of shutting down the unit 108, or reducing the operating speed of the compressors 126, as would be performed to de-ice previous refrigeration units, the heater 138 can instead be controlled for balancing the heat load in the refrigerant of the cycle 112 as well as in the airflow 114 downstream of the evaporator 116. In one embodiment, the heater 138 is an electric resistance heater. Electric heaters make heat nearly instantaneously available for use. In one embodiment, the heater 138 operates in the range of about 1kW to 5kW, although other ranges may be utilized.

The heater 138 is arranged to turn on and/or off at preset or predetermined intervals, on demand, or automatically in response to detected conditions or parameters. The heater 138 is in signal communication with the control unit 110, and the control unit 110 controls operation of the heater 138, e.g., when the heater 138 is turned on and off and for how long, the power delivered to the heater 138, etc. The control unit 110 is in signal communication with one or more sensors, e.g., any combination of the sensors 136, and the measurements made by the sensors 136 are used by the control unit 110 to determine when to turn the heater 138 on and off. The sensors 136a and 136b are used to detect the temperature of the air 114 and the heater 138 is automatically turned on when the temperature at the outlet side 124 of the evaporator 116 reaches or approaches the freezing point of water. The control unit 110 takes into account the altitude of the aircraft 100 and compares the measured temperature to the freezing temperature of water at the current altitude of the aircraft. For example, in one embodiment, the threshold temperature at which the heater 138 is turned on, e.g., as measured by the sensor 136a, is about 35°F (2°C) at sea level and about 25°F (-4°C) at about 25,000 feet (7,620 m). In general, the heater 138 is arranged to turn on any time the control unit identifies the formation of ice or conditions that indicate the possible or likely formation of ice.

The heater 138 can also be triggered in order to control the temperature of the airflow 114 downstream of the evaporator 116. For example, sensors could be positioned within the cargo compartment 104 and/or along the outlet 132 and the heater 138 triggered in order to more accurately regulate the temperature of the cargo compartment 104, e.g., in case the refrigeration unit 104 has overly cooled the area 104, it is desired to heat the area 104, or a new temperature for the area 104 becomes desired. Additionally, the heater 138 could be turned on in order to balance the heat load in the cycle 112 by maintaining the refrigerant at a desired or consistent temperature as the refrigerant exits the evaporator 114. In this way, relevant properties of the refrigerant can be affected by the heater 138 to enable the compressors 126 to more effectively or efficiently operate, e.g., to run at a constant speed. For example, the heater 138 can be arranged to heat the refrigerant or more completely evaporate the refrigerant into gaseous phase, e.g., in response to parameters or conditions detected by the sensor 136c, such that the refrigerant is optimized for the compressors 126. Of course, other threshold temperatures and/or threshold values for other parameters or properties than those stated could be used in other embodiments.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A refrigeration unit for an aircraft comprising:
an evaporator (116) that is configured to receive an airflow (114) and a refrigerant and operatively arranged to transfer heat from the airflow (114) to the refrigerant in order to evaporate at least some of the refrigerant and cool the airflow (114) as the airflow travels from an inlet (118) at an inlet side (120) of the evaporator to an outlet (122) at an outlet side (124) of the evaporator, wherein, in use, the refrigerant travels from an input (123) of the evaporator to an output (125) of the evaporator, the outlet being for fluid communication with a compartment (102, 104) of the aircraft (100); a compressor (126) that is configured to receive the refrigerant from the output (125) of the evaporator (116) and pressurize the refrigerant;
a condenser (128) that is configured to receive the refrigerant from the compressor (126) and condense the refrigerant to liquid phase;
one or more sensors (136b) operatively arranged for monitoring temperature of the airflow (114) at the inlet side (120) of the evaporator (116);
a control unit (110) operatively arranged to control operation of the refrigeration unit;
**characterised in that**:
the refrigeration unit comprises a heater (138) positioned at the inlet side (120) of the evaporator (116) that is configured to heat the airflow (114) before the airflow (114) passes through the inlet (118) of the evaporator (116);
the control unit is configured to receive an altitude of the aircraft and the temperature of the airflow (114) at the inlet side of the evaporator (116); and
the control unit (110) is configured to turn on the heater (138) upon identification of the possible or likely formation of ice, based on a comparison of the temperature of the airflow (114) at the inlet side (120) of the evaporator (116) and the freezing temperature of water at the current altitude of the aircraft.

2. A thermal management system including a refrigeration unit according to claim 1.

3. The thermal management system of claim 2, further comprising one or more sensors (136a,136c,136d) in signal communication with the control unit (110), the one or more sensors (136a,136c,136d) operatively arranged for monitoring one or more parameters or properties of the airflow (114), the refrigerant, or a combination including at least one of the foregoing.

4. The thermal management system of claim 3, wherein the control unit (110) is configured to turn on the heater (138) in response to the one or more parameters or properties reaching a threshold value.

5. An aircraft comprising the thermal management system of one of claims 2 to 4 or the refrigeration unit of claim 1, wherein the inlet (118) is in fluid communication with a cabin (102) of the aircraft (100).

6. A method of regulating a temperature of a compartment of an aircraft comprising:
directing an airflow (114) through an evaporator (116) of a refrigeration unit;
directing a refrigerant through the evaporator (116);
determining a temperature of the airflow at an inlet side (120) of the evaporator (116);
determining an altitude of the aircraft;
heating the airflow (114) to the inlet side (120) of the evaporator (116) with a heater (138) positioned at the inlet side (120) of the evaporator (116) upon identification of the possible or likely formation of ice, based on a comparison of the temperature of the airflow (114) at the inlet side (120) of the evaporator (116) and the freezing temperature of water at the current altitude of the aircraft;
transferring heat from the airflow (114) to the refrigerant in order to evaporate at least some of the refrigerant and cool the airflow (114) as the airflow (114) travels from an inlet (118) at the inlet side (120) of the evaporator (116) to an outlet (122) at an outlet side (124) of the evaporator (116) and the refrigerant travels from an input (123) of the evaporator (116) to an output (125) of the evaporator (116);
directing the airflow (114) into the compartment (102) of the aircraft (100) for regulating a temperature of the compartment (102);
directing the refrigerant from the output (125) of the evaporator (116) to a compressor (126) and compressing the refrigerant with the compressor (126);
directing the refrigerant from the compressor (126) to a condenser (128) and condensing at least some of the refrigerant; and
directing the refrigerant from the condenser (128) to the input (123) of the evaporator (116).

7. The method of claim 6, further comprising melting ice formed within the evaporator (116) with the airflow (114) after heating the airflow (114) with the heater (138).

8. The method of claim 6 or 7, further comprising turning the heater (138) on with a control unit (110) in signal communication with the heater (138).

9. The method of claim 8, further comprising sensing one or more parameters or conditions of the airflow (114), the refrigerant, or a combination including at least one of the foregoing with one or more sensors (136a,136b,136c,136d) in signal communication with the control unit (110).

10. The method of claim 8 or 9, wherein the control unit (110) automatically turns on the heater (138) in response to the one or more parameters or conditions reaching a threshold value.

## Patentansprüche

1. Kühleinheit für ein Flugzeug, umfassend:
einen Verdampfer (116), der dazu konfiguriert ist, einen Luftstrom (114) und ein Kältemittel zu empfangen und wirksam angeordnet ist, um Wärme aus dem Luftstrom (114) zum Kältemittel weiterzuleiten, um zumindest einen Teil des Kältemittels zu verdampfen und den Luftstrom (114) zu kühlen, wenn sich der Luftstrom von einem Einlass (118) an einer Einlassseite (120) des Verdampfers zu einem Auslass (122) an einer Auslassseite (124) des Verdampfers bewegt, wobei sich das Kältemittel im Einsatz von einem Eingang (123) des Verdampfers zu einem Ausgang (125) des Verdampfers bewegt, wobei der Auslass zur Fluidverbindung mit einer Kabine (102, 104) des Flugzeugs (100) dient;
einen Verdichter (126), der dazu konfiguriert ist, das Kältemittel von dem Ausgang (125) des Verdampfers (116) zu empfangen und das Kältemittel unter Druck zu setzen;
einen Kondensator (128), der dazu konfiguriert ist, das Kältemittel von dem Verdichter (126) zu empfangen und das Kältemittel zu einer Flüssigphase zu kondensieren;
einen oder mehrere Sensoren (136b), die wirksam zum Überwachen der Temperatur des Luftstroms (114) an der Einlassseite (120) des Verdampfers (116) angeordnet sind;
eine Steuereinheit (110), die wirksam angeordnet ist, um den Betrieb der Kühleinheit zu steuern;
**dadurch gekennzeichnet, dass**:
die Kühleinheit eine Heizeinrichtung (138) umfasst, die an der Einlassseite (120) des Verdampfers (116) positioniert ist, die dazu konfiguriert ist, den Luftstrom (114) zu erwärmen, bevor der Luftstrom (114) durch den Einlass (118) des Verdampfers (116) hindurchtritt;
die Steuereinheit dazu konfiguriert ist, eine Flughöhe des Flugzeugs und die Temperatur des Luftstroms (114) an der Einlassseite des Verdampfers (116) zu empfangen; und
die Steuereinheit (110) dazu konfiguriert ist, die Heizeinrichtung (138) bei Identifizierung der möglichen oder wahrscheinlichen Bildung von Eis anzuschalten, basierend auf einem Vergleich der Temperatur des Luftstroms (114) an der Einlassseite (120) des Verdampfers (116) und der Gefriertemperatur von Wasser auf der aktuellen Flughöhe des Flugzeugs.

2. Wärmemanagementsystem, das eine Kühleinheit nach Anspruch 1 beinhaltet.

3. Wärmemanagementsystem nach Anspruch 2, ferner umfassend einen oder mehrere Sensoren (136a, 136c, 136d) in Signalverbindung mit der Steuereinheit (110), wobei der eine oder die mehreren Sensoren (136a, 136c, 136d) wirksam zum Überwachen eines oder mehrerer Parameter oder einer oder mehrerer Eigenschaften des Luftstroms (114), des Kältemittels oder einer Kombination, die zumindest eines der vorstehenden beinhaltet, angeordnet sind.

4. Wärmemanagementsystem nach Anspruch 3, wobei die Steuereinheit (110) dazu konfiguriert ist, die Heizeinrichtung (138) als Reaktion darauf, dass der eine oder die mehreren Parameter oder die eine oder mehreren Eigenschaften einen Schwellenwert erreichen, anzuschalten.

5. Flugzeug, umfassend das Wärmemanagementsystem nach einem der Ansprüche 2 bis 4 oder die Kühleinheit nach Anspruch 1, wobei der Einlass (118) in Fluidverbindung mit einer Kabine (102) des Flugzeugs (100) steht.

6. Verfahren zum Regulieren einer Temperatur einer Kabine eines Flugzeugs, umfassend:
Leiten eines Luftstroms (114) durch einen Verdampfer (116) einer Kühleinheit;
Leiten eines Kältemittels durch den Verdampfer (116);
Bestimmen einer Temperatur des Luftstroms an einer Einlassseite (120) des Verdampfers (116);
Bestimmen einer Flughöhe des Flugzeugs;
Erwärmen des Luftstroms (114) zur Einlassseite (120) des Verdampfers (116) mit einer Heizeinrichtung (138), die an der Einlassseite (120) des Verdampfers (116) positioniert ist, bei Identifizierung der möglichen oder wahrscheinlichen Bildung von Eis, basierend auf einem Vergleich der Temperatur des Luftstroms (114) an der Einlassseite (120) des Verdampfers (116) und der Gefriertemperatur von Wasser auf der aktuellen Flughöhe des Flugzeugs;
Weiterleiten der Wärme aus dem Luftstrom (114) zum Kältemittel, um zumindest einen Teil des Kältemittels zu verdampfen und den Luftstrom (114) zu kühlen, wenn sich der Luftstrom (114) von einem Einlass (118) an der Einlassseite (120) des Verdampfers (116) zu einem Auslass (122) an einer Auslassseite (124) des Verdampfers (116) bewegt und sich das Kältemittel von einem Eingang (123) des Verdampfers (116) zu einem Ausgang (125) des Verdampfers (116) bewegt;
Leiten des Luftstroms (114) in die Kabine (102) des Flugzeugs (100) zum Regulieren einer Temperatur der Kabine (102) ;
Leiten des Kältemittels von dem Ausgang (125) des Verdampfers (116) zu einem Verdichter (126) und Verdichten des Kältemittels mit dem Verdichter (126);
Leiten des Kältemittels von dem Verdichter (126) zu einem Kondensator (128) und Kondensieren zumindest eines Teils des Kältemittels; und
Leiten des Kältemittels von dem Kondensator (128) zu dem Eingang (123) des Verdampfers (116).

7. Verfahren nach Anspruch 6, ferner umfassend Schmelzen von Eis, das sich innerhalb des Verdampfers (116) gebildet hat, mit dem Luftstrom (114), nachdem der Luftstrom (114) mit der Heizeinrichtung (138) erwärmt ist.

8. Verfahren nach Anspruch 6 oder 7, ferner umfassend Anschalten der Heizeinrichtung (138) mit einer Steuereinheit (110) in Signalverbindung mit der Heizeinrichtung (138).

9. Verfahren nach Anspruch 8, ferner umfassend Erfassen eines oder mehrerer Parameter oder einer oder mehrerer Bedingungen des Luftstroms (114), des Kältemittels oder einer Kombination, die zumindest eines der vorstehenden beinhaltet, mit einem oder mehreren Sensoren (136a, 136b, 136c, 136d) in Signalverbindung mit der Steuereinheit (110).

10. Verfahren nach Anspruch 8 oder 9, wobei die Steuereinheit (110) die Heizeinrichtung (138) als Reaktion darauf, dass der eine oder die mehreren Parameter oder die eine oder mehreren Bedingungen einen Schwellenwert erreichen, automatisch anschaltet.

## Revendications

1. Unité de réfrigération d'avion comprenant :
un évaporateur (116) qui est configuré pour recevoir un écoulement d'air (114) et un réfrigérant et agencé de manière fonctionnelle pour transférer de la chaleur de l'écoulement d'air (114) au réfrigérant afin d'évaporer au moins une partie du réfrigérant et de refroidir l'écoulement d'air (114) lorsque l'écoulement d'air se déplace depuis une entrée (118) au niveau d'un côté d'entrée (120) de l'évaporateur vers une sortie (122) au niveau d'un côté de sortie (124) de l'évaporateur, dans laquelle, en cours d'utilisation, le réfrigérant se déplace depuis une entrée (123) de l'évaporateur vers une sortie (125) de l'évaporateur, la sortie étant destinée à une communication fluidique avec un compartiment (102, 104) de l'avion (100) ;
un compresseur (126) qui est configuré pour recevoir le réfrigérant depuis la sortie (125) de l'évaporateur (116) et pressuriser le réfrigérant ;
un condenseur (128) qui est configuré pour recevoir le réfrigérant depuis le compresseur (126) et condenser le réfrigérant en phase liquide ;
un ou plusieurs capteurs (136b) agencés de manière fonctionnelle pour surveiller la température de l'écoulement d'air (114) au niveau du côté d'entrée (120) de l'évaporateur (116) ;
une unité de commande (110) agencée de manière fonctionnelle pour commander le fonctionnement de l'unité de réfrigération ;
**caractérisée en ce que** :
l'unité de réfrigération comprend un chauffage (138) positionné au niveau du côté d'entrée (120) de l'évaporateur (116) qui est configuré pour chauffer l'écoulement d'air (114) avant le passage de l'écoulement d'air (114) à travers l'entrée (118) de l'évaporateur (116) ;
l'unité de commande est configurée pour recevoir une altitude de l'avion et la température de l'écoulement d'air (114) au niveau du côté d'entrée de l'évaporateur (116) ; et
l'unité de commande (110) est configurée pour mettre le chauffage (138) sous tension après l'identification de la possible ou de la probable formation de glace, sur la base d'une comparaison de la température de l'écoulement d'air (114) au niveau du côté d'entrée (120) de l'évaporateur (116) et de la température de congélation de l'eau à l'altitude actuelle de l'avion.

2. Système de gestion thermique comprenant une unité de réfrigération selon la revendication 1.

3. Système de gestion thermique selon la revendication 2, comprenant en outre un ou plusieurs capteurs (136a, 136c, 136d) en communication par signaux avec l'unité de commande (110), les un ou plusieurs capteurs (136a, 136c, 136d) étant agencés de manière fonctionnelle pour surveiller un ou plusieurs paramètres ou propriétés de l'écoulement d'air (114), le réfrigérant ou une combinaison comprenant au moins l'un des éléments susmentionnés.

4. Système de gestion thermique selon la revendication 3, dans lequel l'unité de commande (110) est configurée pour mettre le chauffage (138) sous tension en réponse aux un ou plusieurs paramètres ou propriétés atteignant une valeur seuil.

5. Avion comprenant le système de gestion thermique selon les revendications 2 à 4 ou unité de réfrigération selon la revendication 1, dans lequel l'entrée (118) est en communication fluidique avec une cabine (102) de l'avion (100) .

6. Procédé de régulation de la température d'un compartiment d'un avion comprenant :
la direction d'un écoulement d'air (114) à travers un évaporateur (116) ou une unité de réfrigération ;
la direction d'un réfrigérant à travers l'évaporateur (116) ;
la détermination d'une température de l'écoulement d'air au niveau d'un côté d'entrée (120) de l'évaporateur (116) ;
la détermination d'une altitude de l'avion ;
le chauffage de l'écoulement d'air (114) au niveau du côté d'entrée (120) de l'évaporateur (116) avec un chauffage (138) positionné au niveau du côté d'entrée (120) de l'évaporateur (116) après l'identification de la possible ou de la probable formation de glace, sur la base d'une comparaison de la température de l'écoulement d'air (114) au niveau du côté d'entrée (120) de l'évaporateur (116) et de la température de congélation de l'eau à l'altitude actuelle de l'avion :
le transfert de chaleur de l'écoulement d'air (114) au réfrigérant afin d'évaporer au moins une partie du réfrigérant et de refroidir l'écoulement d'air (114) lorsque l'écoulement d'air (114) se déplace depuis une entrée (118) au niveau du côté d'entrée (120) de l'évaporateur (116) vers une sortie (122) au niveau d'un côté de sortie (124) de l'évaporateur (116) et le réfrigérant se déplace depuis une entrée (123) de l'évaporateur (116) vers une sortie (125) de l'évaporateur (116) ;
la direction de l'écoulement d'air (114) dans le compartiment (102) de l'avion (100) pour réguler la température du compartiment (102) ;
la direction du réfrigérant depuis la sortie (125) de l'évaporateur (116) vers un compresseur (126) et la compression du réfrigérant avec le compresseur (126) ;
la direction du réfrigérant depuis le compresseur (126) vers un condenseur (128) et la condensation d'au moins une partie du réfrigérant ; et
la direction du réfrigérant depuis le condenseur (128) vers l'entrée (123) de l'évaporateur (116).

7. Procédé selon la revendication 6, comprenant en outre la fusion de la glace formée à l'intérieur de l'évaporateur (116) avec l'écoulement d'air (114) après le chauffage de l'écoulement d'air (114) avec le chauffage (138).

8. Procédé selon la revendication 6 ou 7, comprenant en outre la mise sous tension du chauffage (138) avec une unité de commande (110) en communication par signaux avec le chauffage (138).

9. Procédé selon la revendication 8, comprenant en outre la détection d'un ou de plusieurs paramètres ou conditions de l'écoulement d'air (114), du réfrigérant ou une combinaison comprenant au moins l'un des éléments susmentionnés avec un ou plusieurs capteurs (136a, 136b, 136c, 136d) en communication par signaux avec l'unité de commande (110).

10. Procédé selon la revendication 8 ou 9, dans lequel l'unité de commande (110) met automatiquement le chauffage (138) sous tension en réponse aux un ou plusieurs paramètres ou conditions atteignant une valeur seuil.
